# EUROPEAN PATENT APPLICATION

(11) **EP 4 776 407 A1**
(43) Date of publication of application: **15.07.2026**
(21) Application number: 23951326.0
(22) Date of filing: 20.11.2023
(51) Int. Cl.: H01M 50/244

(54) **BATTERY ASSEMBLY AND SNOW CLEARING ROBOT**

(30) Priority: 07.09.2023 CN 202322450162 U; 07.09.2023 CN 202322449202 U; 07.09.2023 CN 202322439021 U
(71) Applicant: Shenzhen Hanyang Technology Co., Ltd., Shenzhen, Guangdong 518000 (CN)
(72) Inventor: SONG, Yongqi, Shenzhen, Guangdong 518000 (CN); ZHU, Taotao, Shenzhen, Guangdong 518000 (CN)
(74) Representative: Abel & Imray LLP
(86) International application number: PCT/CN2023/132675
(87) International publication number: WO 2025/050513

(57) **Abstract**

The present application relates to a battery assembly and a snow-clearing robot. The battery assembly includes a battery and a battery compartment. The battery includes a battery cell body and a female connecting socket, wherein the female connecting socket is located at a top edge of the battery cell body or adjacent to the battery cell body, a bottom of the female connecting socket is exposed from the battery cell body, and the female connecting socket serves as a charging interface and a discharging interface of the battery cell body; the battery compartment is generally in a tubular shape, the battery is insertable into the battery compartment; a male plug connector adapted to the female connecting socket is disposed in the battery compartment, and when the battery is installed in the battery compartment, the male plug connector is plugged into the female connecting socket.

## Description

### CROSS-REFERENCE TO RELATED APPLICATIONS

This application claims priority to three Chinese patent applications filed on September 7, 2023, with Application Numbers 202322450162.2, 202322449202.1, and 202322439021.0, the full contents of which are hereby incorporated by reference.

### TECHNICAL FIELD

This application relates to the field of robot technology, and particularly relates to a battery assembly and a snow-clearing robot.

### BACKGROUND

With the rapid development of robot technology, domestic robots have begun to enter every corner of life. As a type of domestic robot, a snow-clearing robot includes a snow clearing device and a carrier for dragging the snow clearing device to move within a courtyard. The carrier is usually a wheeled or tracked vehicle body. The snow clearing device includes a snow-rolling mechanism and a snow-throwing mechanism. The snow-rolling mechanism gathers snow from the ground into a snow-rolling chamber, and then the snow in the chamber is thrown in a specified direction by the snow-throwing mechanism.

In pursuit of the concept of low-carbon environmental protection and energy conservation and emission reduction, traditional snow-clearing robots relying on fuel for power are gradually being phased out. The current development direction for existing snow-clearing robots mainly adopts an electric structure powered by a storage battery. The commonly used storage battery solution on the market currently is: removing the storage battery from the main unit of the snow-clearing robot and connecting a separate charging base to the charging interface of the storage battery to charge it; after the storage battery is installed on the main unit of the snow-clearing robot, connecting the discharging interface of the storage battery to the snow-clearing robot via a separate power cord to achieve discharging of the storage battery.

### SUMMARY

According to various embodiments of the present application, a battery assembly and a snow-clearing robot are provided.

The battery assembly according to embodiments of the present application includes:
a battery, including a battery cell body and a female connecting socket, wherein the female connecting socket is located at a top edge of the battery cell body or adjacent to the battery cell body, a bottom of the female connecting socket is exposed from the battery cell body, and the female connecting socket serves as a charging interface and a discharging interface of the battery cell body; and
a battery compartment, wherein the battery compartment is generally in a tubular shape, the battery is insertable into the battery compartment; a male plug connector adapted to the female connecting socket is disposed in the battery compartment, and when the battery is installed in the battery compartment, the male plug connector is plugged into the female connecting socket.

In some embodiments, a female socket protective cover sleeves the periphery of the female connecting socket, the female socket protective cover is generally a plate-like structure, a female socket fixing cavity penetrating the female socket protective cover is disposed in the female socket protective cover along a vertical direction, and the female connecting socket can be inserted into the female socket fixing cavity; a bottom surface of the female connecting socket is flush with a lower side of an inner surface of the female socket fixing cavity, or the bottom surface of the female connecting socket is slightly higher than the lower side of the inner surface of the female socket fixing cavity.

In some embodiments, a plurality of connecting ears are disposed at an edge of the female socket protective cover along a circumferential direction of the female socket protective cover.

In some embodiments, a top protective cover is disposed at a top of the battery cell body, the top protective cover is detachably connected to the battery cell body, tops of the female connecting socket and the female socket protective cover are covered by the top protective cover, and the female socket protective cover is detachably connected to the top protective cover via the connecting ears.

In some embodiments, a female socket circuit board is further disposed between the top protective cover and the female connecting socket, and the female connecting socket is fixed below the female socket circuit board and electrically connected to the female socket circuit board.

In some embodiments, a first groove recessed downward is disposed at a top of the top protective cover, and a handle is further disposed on the top protective cover, the handle spanning across two ends of the first groove.

In some embodiments, a space between a sidewall enclosing the first groove and a sidewall enclosing the top protective cover forms an installation cavity, and the female socket circuit board is disposed in the installation cavity.

In some embodiments, one side of the female socket protective cover is exposed from a side surface of the battery cell body.

In some embodiments, a slide groove is disposed on one side of the battery cell body adjacent to the female socket protective cover along a vertical direction, and the battery cell body can slide up and down relative to the male plug connector via the slide groove along the vertical direction.

In some embodiments, a bottom protective cover is further disposed at a bottom of the battery cell body, and the battery cell body is detachably connected to the bottom protective cover.

In some embodiments, the battery includes a top protective cover, the top protective cover is disposed at a top of the battery cell body and detachably connected to the battery cell body; and the top protective cover covers a top of the female connecting socket.

In some embodiments, a plurality of first through holes are circumferentially disposed at a top of the top protective cover, a first connecting bolt passes through each first through hole, a plurality of first connecting holes are disposed at the top of the battery cell body, the plurality of first connecting holes correspond one-to-one to the plurality of first through holes, and the first connecting bolt can pass through the first connecting hole and be cooperatively connected with a nut to relatively fix the top protective cover and the battery cell body.

In some embodiments, the battery compartment includes a base and a front baffle, a rear baffle, a left baffle, and a right baffle perpendicular to the base, an accommodating cavity for accommodating the battery is enclosed by the front baffle, the rear baffle, the left baffle, and the right baffle together, and a shape of the accommodating cavity is adapted to the battery.

In some embodiments, the rear baffle, the left baffle, and the right baffle are integrally formed, the front baffle is detachably connected to the left baffle, and the front baffle is detachably connected to the right baffle; second through holes are disposed at two sides of the front baffle, a second connecting bolt passes through each second through hole, connecting plates are disposed at edges of the left baffle and the right baffle near the front baffle respectively, the connecting plates are parallel to the front baffle, second connecting holes corresponding to the second through holes are disposed in the connecting plates, and the second connecting bolt passes through the second connecting hole and engages with a nut to fix the front baffle relative to the left baffle, and to fix the front baffle relative to the right baffle.

In some embodiments, protruding positioning blocks are disposed at bottoms of the left baffle and the right baffle respectively, positioning holes adapted to the positioning blocks are disposed in the base, and the positioning blocks can be inserted into the positioning holes.

In some embodiments, fixing ears are disposed at bottoms of the left baffle and the right baffle respectively, the fixing ears are perpendicular to the positioning blocks and extend in a direction away from the battery compartment; third through holes are disposed in the fixing ears, a third connecting bolt passes through each third through hole, third connecting holes adapted to the third through holes are disposed in the base, and the third connecting bolt passes through the third connecting hole and engages with a nut to fix the base relative to the fixing ears.

In some embodiments, top-near portions of the rear baffle, the left baffle, and the right baffle are slightly inclined outward to form expanded portions, and the plurality of expanded portions enclose to form a conical structure with a wide top and a narrow bottom.

In some embodiments, a first groove recessed downward is disposed at a top of the top protective cover, and a handle is further disposed on the top protective cover, the handle spanning across two ends of the first groove.

In some embodiments, a female socket protective cover sleeves the periphery of the female connecting socket, one side of the female socket protective cover is exposed from a side surface of the battery cell body, and the female socket protective cover is flush with a sidewall of the top protective cover at the side.

In some embodiments, a connecting bracket is disposed at a top of the battery compartment, a bracket base is fixedly connected to the connecting bracket, and the male plug connector is disposed on the bracket base.

In some embodiments, the connecting bracket is an inverted L-shape, the connecting bracket includes a vertical bracket sidewall and a horizontal bracket sidewall, and a bracket through hole for installing the bracket base is disposed in the horizontal bracket sidewall.

In some embodiments, the bracket base is generally L-shaped, the bracket base includes a vertical support sidewall and a horizontal support sidewall, the vertical support sidewall is parallel to the vertical bracket sidewall, the horizontal support sidewall is parallel to the horizontal bracket sidewall, and the male plug connector is detachably connected to the vertical support sidewall; the horizontal support sidewall is located above the horizontal bracket sidewall, a support connecting hole is disposed at a bottom of the horizontal support sidewall, the support connecting hole corresponds to the bracket through hole; a vertical support post is further disposed in the battery compartment, a connecting post is disposed at a top of the vertical support post, the connecting post can pass through the bracket through hole and be threadedly connected to the horizontal support sidewall in the support connecting hole to be relatively fixed.

In some embodiments, the battery compartment includes a base and a front baffle, a rear baffle, a left baffle, and a right baffle perpendicular to the base, an accommodating cavity for accommodating the battery is enclosed by the front baffle, the rear baffle, the left baffle, and the right baffle together, and a shape of the accommodating cavity is adapted to the battery.

In some embodiments, the connecting bracket is disposed on the left baffle, the vertical bracket sidewall is integrally connected to the left baffle, and the horizontal bracket sidewall is perpendicular to the left baffle and extends in a direction toward the right baffle.

In some embodiments, at least two vertical support posts are provided, and bottoms of the vertical support posts are detachably connected to the base.

In some embodiments, top-near portions of the rear baffle, the left baffle, and the right baffle are slightly inclined outward to form expanded portions, and a clearance hole is disposed in the expanded portion of the left baffle.

In some embodiments, a slide groove is disposed on one side of the battery cell body adjacent to the female socket protective cover along a vertical direction, and the battery cell body can slide relative to the male plug connector via the slide groove along the vertical direction.

In some embodiments, a top protective cover is disposed at a top of the battery cell body, a bottom protective cover is disposed at a bottom of the battery cell body, the top protective cover is detachably connected to the battery cell body, and the bottom protective cover is detachably connected to the battery cell body.

The snow-clearing robot of the embodiments of the present application includes the aforementioned battery assembly.

Details of one or more embodiments of the present application are presented in the following drawings and description. Other features, objectives, and advantages of the present application will become apparent from the specification, the drawings, and the claims.

### BRIEF DESCRIPTION OF THE DRAWINGS

To better describe and illustrate the embodiments and/or examples disclosed herein, reference may be made to one or more drawings. Additional details or examples used to describe the drawings should not be considered as limitations on the scope of the embodiments and/or examples of the present application.
FIG. 1 is a schematic structural diagram of a battery assembly according to some embodiments of the present application;
FIG.2 is an exploded schematic diagram of the battery assembly shown in FIG. 1;
FIG. 3 is a cross-sectional schematic diagram of the battery assembly shown in FIG. 1;
FIG. 4 is a partial enlarged diagram of a region B in FIG. 3;
FIG. 5 is a schematic diagram of a battery in the battery assembly shown in FIG. 1;
FIG. 6 is an exploded schematic diagram of a battery compartment in the battery assembly shown in FIG. 1;
FIG. 7 is a partial enlarged diagram of a region A in FIG. 6;
FIG. 8 is a schematic diagram of a male plug connector and a bracket base in the battery assembly shown in FIG. 1; and
FIG. 9 is a schematic structural diagram of a female socket protective cover in the battery assembly shown in FIG. 1.

### DETAILED DESCRIPTION

To make the above-mentioned objectives, features, and advantages of the present application more clearly and easily understandable, a detailed description of the specific implementation modes of the present application will be provided below in conjunction with the drawings. Many specific details are set forth in the following description to facilitate a full understanding of the present application. However, the present application can be implemented in many different ways from those described herein, and those skilled in the art can make similar improvements without departing from the connotation of the present application. Therefore, the present application is not limited to the specific embodiments disclosed below.

In the description of the present application, it should be understood that the orientation or positional relationships indicated by terms such as "center", "vertical", "horizontal", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientation or positional relationships shown in the drawings. These are merely for the convenience of describing the present application and simplifying the description, and do not indicate or imply that the device or element referred to must have a specific orientation, be constructed and operated in a specific orientation. Therefore, they should not be construed as limitations on the present application.

In the present application, unless otherwise expressly specified and limited, a first feature being "on" or "under" a second feature may mean that the first and second features are in direct contact, or that the first and second features are in indirect contact through an intermediate medium. Furthermore, a first feature being "above", "over", and "on top of" a second feature may mean that the first feature is directly above or obliquely above the second feature, or may merely mean that the horizontal height of the first feature is greater than that of the second feature. A first feature being "under", "below", and "beneath" a second feature may mean that the first feature is directly below or obliquely below the second feature, or may merely mean that the horizontal height of the first feature is less than that of the second feature. The terms "vertical", "horizontal", "upper", "lower", "left", "right", and similar expressions used in the present application are for descriptive purposes only and do not represent the only implementation mode.

Furthermore, the terms "first" and "second" are used for descriptive purposes only and should not be construed as indicating or implying relative importance or implicitly specifying the number of the indicated technical features. Thus, features defined by "first" and "second" may explicitly or implicitly include at least one of the features. In the description of the present application, the meaning of "a plurality of" is at least two, for example, two, three, etc., unless otherwise expressly and specifically limited.

In the present application, unless otherwise expressly specified and limited, terms such as "installed", "connected", "connection", and "fixed" should be broadly understood. For example, the connection may be a fixed connection, a detachable connection, or an integral connection; the connection may be a mechanical connection or an electrical connection; the connection may be a direct connection or an indirect connection through an intermediate medium, and may be internal communication between two elements or an interaction relationship between two elements, unless otherwise expressly limited. It should be noted that when an element is referred to as being "fixed to" or "disposed on" another element, it can be directly on the other element or there may be an intervening element. When an element is considered to be "connected" to another element, it can be directly connected to the other element or there may be an intervening element at the same time. For those of ordinary skill in the art, the specific meaning of the above-mentioned terms in the present application can be understood according to the specific situation.

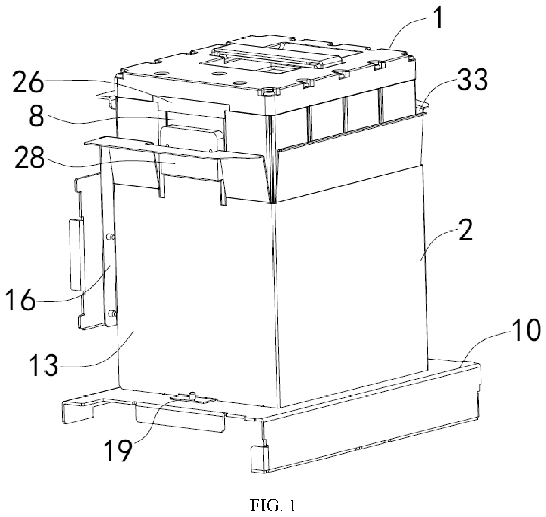

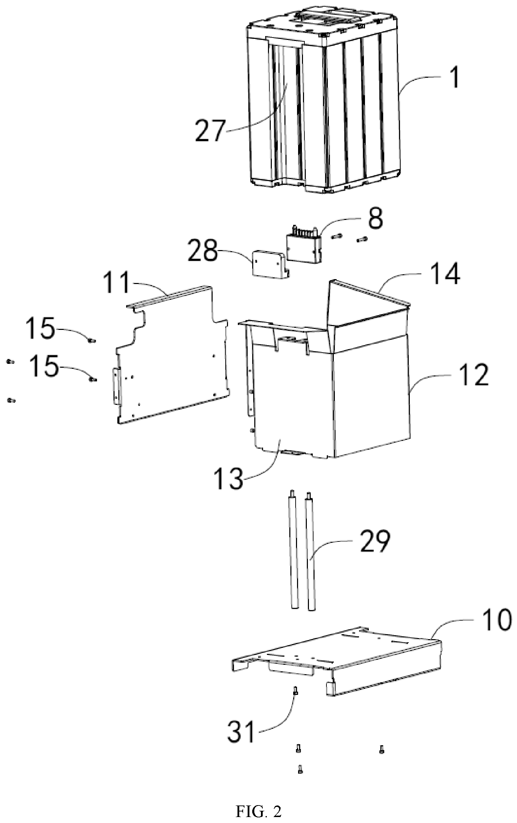

As shown in FIGS. 1 to 9, the present application provides a battery assembly, which includes a battery 1 and a battery compartment 2. The battery 1 can be quickly installed in or removed from the battery compartment 2. When the battery 1 is inserted in the battery compartment 2, it can supply power to an external device (for example, the main unit of the snow-clearing robot) through the battery compartment 2. When the battery 1 is low on power, the battery 1 is removed from the battery compartment 2 for charging, and after charging is completed, the battery 1 is put back into the battery compartment 2 to continue supplying power.

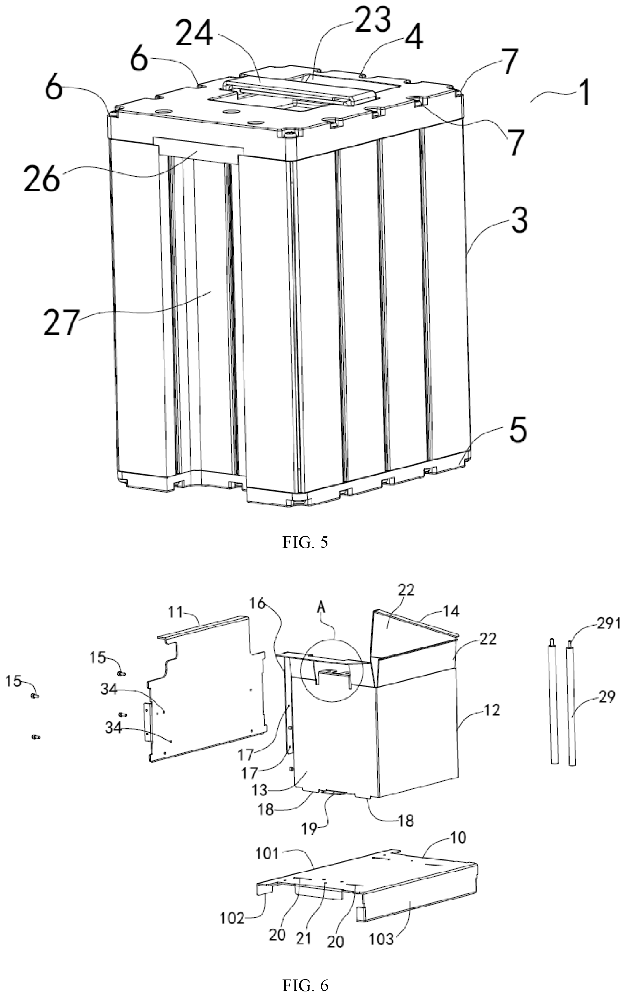

In conjunction with FIGS. 1 and 5, in this embodiment, the battery 1 includes a battery cell body 3, a top protective cover 4, and a bottom protective cover 5. The top protective cover 4 is disposed on the top of the battery cell body 3 and is detachably connected to the battery cell body 3. A plurality of first through holes 6 are arranged circumferentially on the top of the top protective cover 4. A first connecting bolt 7 passes through the first through hole 6. A plurality of first connecting holes (not shown) are disposed on the top of the battery cell body 3, and the plurality of first connecting holes are arranged in one-to-one correspondence with the plurality of first through holes 6. The first connecting bolt 7 can pass through the first connecting hole 6 and engage with a nut to fix the top protective cover 4 relative to the battery cell body 3. In this way, the detachable connection between the top protective cover 4 and the battery cell body 3 can be achieved. Similar to the top protective cover 4, the bottom protective cover 5 is also detachably connected to the battery cell body 3 in this manner, and will not be repeated here.

As shown in FIG. 5, in this embodiment, a first groove 23 recessed downward is disposed on the top of the top protective cover 4. The top protective cover 4 is further provided with a handle 24, which spans across two ends of the first groove 23. By providing the first groove 23, it is convenient for a hand to grip the handle 24. The battery 1 can be pulled out or pushed in through the handle 24, making it convenient to remove or install from the battery compartment 2.

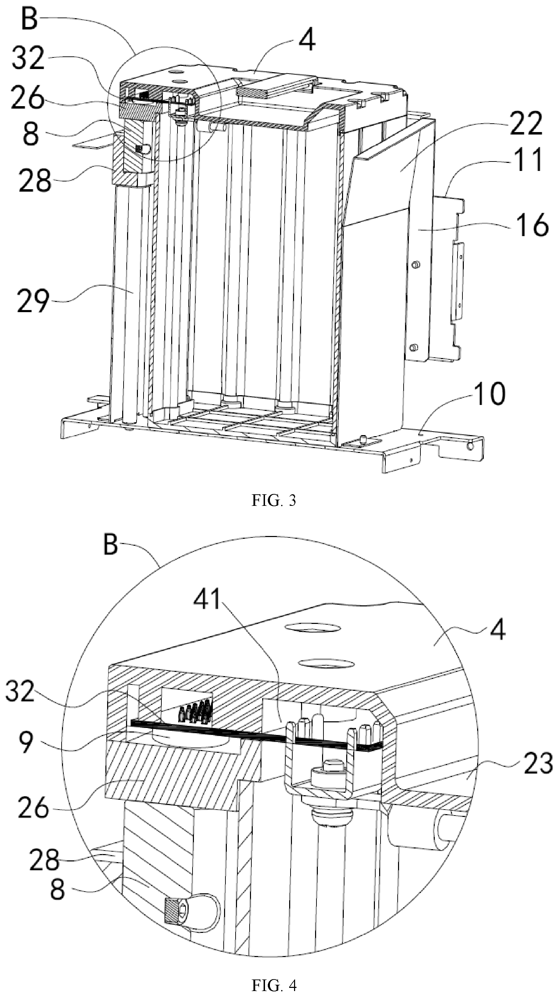

In conjunction with FIGS. 3, 4, and 9, in this embodiment, the female connecting socket 9 is located at a top edge of the battery cell body 3 or adjacent to the battery cell body 3, a bottom of the female connecting socket 9 is exposed from the battery cell body 3, and the female connecting socket 9 serves as a charging interface and a discharging interface of the battery cell body 3. The battery compartment 2 is generally in a tubular shape and adapted to the battery 1, and the battery 1 can be inserted into the battery compartment 2. A male plug connector 8 adapted to the female connecting socket 9 is disposed in the battery compartment 2. When the battery 1 is installed in the battery compartment 2, the male plug connector 8 can be plugged into the female connecting socket 9.

The above-mentioned battery 1 is generally rectangular. In other embodiments, the shape of the battery 1 can be changed.

In some embodiments, the positions of the female connecting socket 9 and the male plug connector 8 can be interchanged, that is, the male plug connector 8 is disposed on the battery cell body 3, and the female connecting socket 9 is disposed in the battery compartment 2.

After the battery 1 is removed from the battery compartment 2, the battery 1 can be charged through the female connecting socket 9. After the battery 1 is fully charged, it is put back into the battery compartment 2, and the male plug connector 8 is plugged into the female connecting socket 9, then the female connecting socket 9 serves as the discharging interface to discharge through the battery compartment 2. It can be seen that the female connecting socket 9 can serve as both the charging interface and the discharging interface, so the battery 1 integrates the charging interface and the discharging interface, and the user does not need to distinguish between them during use, making operation simple and convenient.

In addition, when the battery 1 is installed in the battery compartment 2, it is not necessary to connect to the battery compartment 2 through an additional power cord, but only through the plugging connection between the female connecting socket 9 and the male plug connector 8, which reduces circuit damage caused by the user during installation and removal of the battery 1, extends the service life of the battery, and also achieves quick disassembly and assembly of the battery assembly.

It can be understood that in conventional storage battery solutions, the charging interface and the discharging interface of the storage battery are independent of each other and located at different positions, which increases the manufacturing cost of the storage battery and also increases the difficulty for the user to install the storage battery. The battery assembly of the present application can better solve this problem, reducing the manufacturing cost of the battery 1 and making the operation of installing the battery 1 by the user simple and convenient.

Furthermore, the male plug connector 8 is disposed at the top of the battery compartment 2, and the female connecting socket 9 is disposed at the top of the battery 1. After the male plug connector 8 and the female connecting socket 9 are plugged together, they are located at a relatively high vertical position, so snow water will not enter the male plug connector 8 and the female connecting socket 9, avoiding damage to the battery assembly, so that the battery assembly has a waterproof function.

In this embodiment, a female socket circuit board 32 is further disposed between the top protective cover 4 and the female connecting socket 9. The female connecting socket 9 is fixed below the female socket circuit board 32 and is electrically connected to the female socket circuit board 32.

Specifically, a space between a sidewall enclosing the first groove 23 and a sidewall enclosing the top protective cover 4 forms an installation cavity 41, and the female socket circuit board 32 is disposed in the installation cavity 41 and is electrically connected to the battery cell body 3.

A female socket protective cover 26 sleeves the periphery of the female connecting socket 9. The female socket protective cover 26 plays a protective role around the female connecting socket 9 to prevent snow water, sand, etc. from entering the female connecting socket 9 and causing the female connecting socket 9 to be damaged or fail.

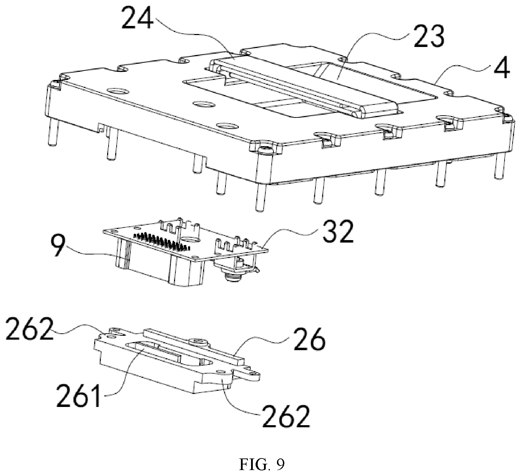

As shown in FIG. 9, in this embodiment, the female socket protective cover 26 is generally a plate-like structure. The female socket protective cover 26 is provided with a female socket fixing cavity 261 in the vertical direction. The female socket fixing cavity 261 penetrates the female socket protective cover 26. The female connecting socket 9 can be inserted into the female socket fixing cavity. The bottom surface of the female connecting socket 9 is flush with the lower side of the inner surface of the female socket fixing cavity to facilitate engagement with the male plug connector 8 in the battery compartment 2. In some embodiments, the bottom surface of the female connecting socket 9 can also be slightly higher than the lower side of the inner surface of the female socket fixing cavity 261, so that the bottom of the female connecting socket 9 is not exposed, which can provide a protective effect on the bottom of the female connecting socket 9.

Thus, the battery assembly of this embodiment includes a battery 1 and a battery compartment 2. The battery 1 includes a battery cell body 3 and a female connecting socket 9. The female connecting socket 9 is located at the top edge of the battery cell body 3 or adjacent to the battery cell body 3. The bottom of the female connecting socket 9 is exposed from the battery cell body 3. A female socket protective cover sleeves the periphery of the female connecting socket 9. The female socket protective cover 26 is provided with a female socket fixing cavity 261. The female connecting socket 9 can be inserted into the female socket fixing cavity 261. The bottom surface of the female connecting socket 9 is flush with the lower side of the inner surface of the female socket fixing cavity 261 or the bottom surface of the female connecting socket 9 is slightly higher than the lower side of the inner surface of the female socket fixing cavity 261. The battery 1 can be inserted into the battery compartment 2. The male plug connector 8 adapted to the female connecting socket 9 is disposed in the battery compartment 2. When the battery 1 is installed in the battery compartment 2, the male plug connector 8 can be plugged into the female connecting socket 9. The female socket protective cover 26 plays a protective role on the female connecting socket 9 to prevent snow water, sand, etc. from entering the female connecting socket 9 and causing the female connecting socket 9 to be damaged or fail, so that the battery assembly has an interface protection function.

In this embodiment, the top protective cover 4 is disposed on the top of the battery cell body 3 and is detachably connected to the battery cell body 3. The top protective cover 4 covers the top of the female connecting socket 9. In this way, the top of the female connecting socket 9 is enclosed within the top protective cover 4, so that the top protective cover 4 can provide a protective effect on the top of the female connecting socket 9.

Specifically, the top protective cover 4 also covers the tops of the female connecting socket 9 and the female socket protective cover 26, that is, the tops of the female connecting socket 9 and the female socket protective cover 26 are both enclosed within the top protective cover 4, so that the top protective cover 4 can provide a protective effect on both the top of the female connecting socket 9 and the female socket protective cover 26.

In this embodiment, along the circumference of the female socket protective cover 26, a plurality of connecting ears 262 are disposed on the edge of the female socket protective cover 26. The female socket protective cover 26 is detachably connected to the top protective cover 4 through the connecting ears 262.

As shown in FIG. 5, in this embodiment, one side of the female socket protective cover 26 is exposed from the side of the battery cell body 3 and is flush with the sidewall of the top protective cover 4 at this side. When encountering rain or snow water, the water flows downward along the sidewall of the top protective cover 4 and the sidewall of the female socket protective cover 26 and will not enter the connection between the female connecting socket 9 and the male plug connector 8, avoiding damage or failure of the female connecting socket 9 and the male plug connector 8 due to water.

A slide groove 27 is disposed on one side of the battery cell body 3 adjacent to the female socket protective cover 26 along a vertical direction, the female socket protective cover 26 is disposed on the top of the slide groove 27, and the battery cell body 3 can slide downward relative to the male plug connector 8 via the slide groove 27 along the vertical direction, enabling rapid engagement of the male plug connector 8 with the female connecting socket 9.

In conjunction with FIGS. 1, 2, and 6, in this embodiment, the battery compartment 2 includes a base 10 and a front baffle 11, a rear baffle 12, a left baffle 13, and a right baffle 14 perpendicular to the base 10. An accommodating cavity 33 for accommodating the battery 1 is enclosed by the front baffle 11, the rear baffle 12, the left baffle 13, and the right baffle 14 together, and a shape of the accommodating cavity 33 is adapted to the battery 1.

Further, in FIG. 6, the base 10 includes a bottom plate 101 and a first support wall 102 and a second support wall 103 disposed at the bottom of the bottom plate 101. The first support wall 102 and the second support wall 103 are respectively located at the front and rear sides of the bottom plate 101 and are perpendicular to the bottom plate 101.

In this embodiment, the rear baffle 12, the left baffle 13, and the right baffle 14 are integrally formed to enclose a U-shaped structure. The front baffle 11 is detachably connected to both the left baffle 13 and the right baffle 14.

Specifically, second through holes 34 are disposed at two sides of the front baffle 11, a second connecting bolt 15 passes through the second through hole 34, connecting plates 16 are disposed at edges of the left baffle 13 and the right baffle 14 near the front baffle 11, respectively, the connecting plates 16 are parallel to the front baffle 11. The connecting plate 16 extends in a direction away from the left baffle 13 or the right baffle 14. Second connecting holes 17 corresponding to the second through holes 34 are disposed in the connecting plates 16, and the second connecting bolt 15 can pass through the second connecting hole 17 and engage with a nut to fix the front baffle 11 relative to the left baffle 13 and the right baffle 14.

In this embodiment, top-near portions of the rear baffle 12, the left baffle 13, and the right baffle 14 are slightly inclined outward to form expanded portions 22, and the plurality of expanded portions 22 enclose to form a conical structure with a wide top and a narrow bottom, which facilitates the insertion of the battery 1 into the battery compartment 2 from the top thereof.

In this embodiment, protruding positioning blocks 18 are disposed at bottoms of the left baffle 13 and the right baffle 14, respectively, positioning holes 20 adapted to the positioning blocks 18 are disposed in the base 10, and the positioning blocks 18 can be inserted into the positioning holes 20. The positioning holes 20 are disposed on the bottom plate 101 of the base 10. The bottoms of the left baffle 13 and the right baffle 14 are inserted into the corresponding positioning holes 20 through the positioning blocks 18 to achieve pre-positioning of the left baffle 13 and the right baffle 14.

Further, fixing ears 19 are disposed at bottoms of the left baffle 13 and the right baffle 14, respectively, the fixing ears 19 are perpendicular to the positioning blocks 18 and extend in a direction away from the battery compartment 2; third through holes (not shown) are disposed in the fixing ears 19, a third connecting bolt 31 passes through the third through hole, third connecting holes 21 adapted to the third through holes are disposed in the base 10, and the third connecting bolt 31 can pass through the third connecting hole 21 and engage with a nut to fix the base 10 relative to the fixing ears 19. In this way, the left baffle 13 and the right baffle 14 can be fixed to the base 10.

In this embodiment, the bottoms of the left baffle 13 and the right baffle 14 are each provided with two positioning blocks 18 and one fixing ear 19. The fixing ear 19 is located between the two positioning blocks 18.

As shown in FIG. 6, in this embodiment, a connecting bracket 25 is disposed at the top of the battery compartment 2. A bracket base 28 is fixed to the connecting bracket 25. The bracket base 28 is provided with a male plug connector 8 adapted to the female connecting socket 9. When the battery 1 is installed in the battery compartment 2, the male plug connector 8 can be plugged into the female connecting socket 9.

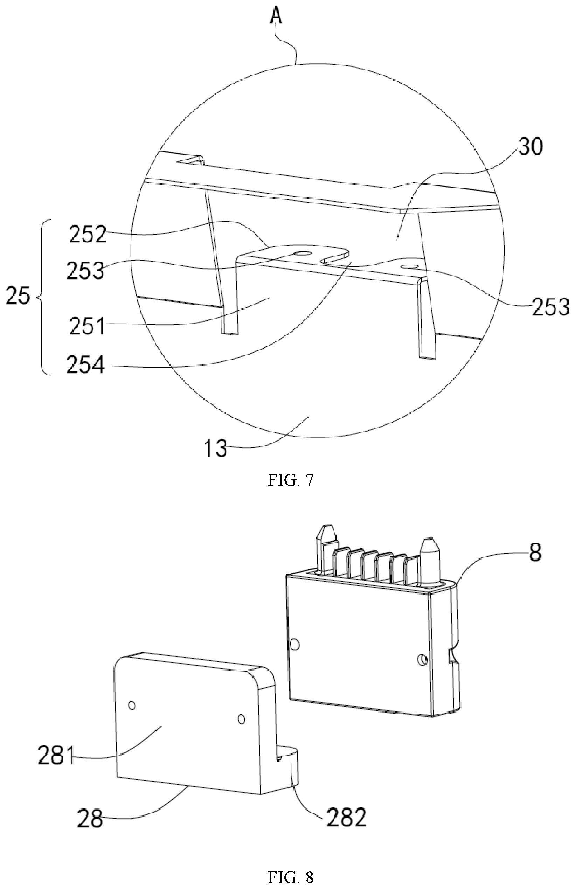

In conjunction with FIGS. 6 and 7, in this embodiment, the connecting bracket 25 is located on the left baffle 13 and is near the expanded portion 22 of the left baffle 13. The expanded portion 22 of the left baffle 13 is provided with a clearance hole 30. The clearance hole 30 provides a clearance space for the connecting bracket 25 to prevent the expanded portion 22 and the connecting bracket 25 from interfering with each other.

In this embodiment, the connecting bracket 25 is in an inverted L-shape and includes a vertical bracket sidewall 251 and a horizontal bracket sidewall 252. The vertical bracket sidewall 251 is integrally connected to the left baffle 13. The horizontal bracket sidewall 252 is perpendicular to the left baffle 13 and extends in the direction of the right baffle 14. The horizontal bracket sidewall 252 is provided with bracket through holes 253. The bracket through holes 253 are used for installing the bracket base 28. A wire passing groove 254 is further disposed at the middle position of the horizontal bracket sidewall 252. The cable at the bottom of the male plug connector 8 passes through the wire passing groove 254.

The bracket base 28 is generally L-shaped. The bracket base 28 includes a vertical base sidewall 281 and a horizontal base sidewall 282. The vertical base sidewall 281 is parallel to the vertical bracket sidewall 251. The horizontal base sidewall 282 is parallel to the horizontal bracket sidewall 252. The male plug connector 8 is detachably connected to the vertical base sidewall 281. The horizontal base sidewall 282 is located above the horizontal bracket sidewall 252. Base connecting holes (not shown) corresponding to the bracket through holes 253 are disposed at the bottom of the horizontal base sidewall 282. Vertical support posts 29 are further disposed in the battery compartment 2. The vertical support post 29 is capable of providing a supporting force to the connecting bracket 25 on the one hand, and also serves to connect the bracket base 28 on the other hand. Specifically, a connecting post 291 is disposed at the top of the vertical support post 29. The connecting post 291 can pass through the bracket through hole 253 and is threadedly connected in the base connecting hole with the horizontal base sidewall 282 to be relatively fixed, thereby achieving the fixation of the bracket base 28.

In this embodiment, there are at least two vertical support posts 29, and the bottoms of the vertical support posts 29 are detachably connected to the base 10.

The present application also discloses a snow-clearing robot having the above-mentioned battery assembly. When the snow-clearing robot encounters a deep snow water environment, since the male plug connector 8 is disposed at the top of the battery compartment 2 and the female connecting socket 9 is disposed at the top of the battery 1, the vertical height where the male plug connector 8 and the female connecting socket 9 are located after being plugged together is relatively high, and snow water will not enter the male plug connector 8 and the female connecting socket 9, avoiding damage to the male plug connector 8 and the female connecting socket 9. In addition, the provision of the female socket protective cover 26 can also play a protective role on the female connecting socket 9 to prevent snow water, sand, etc. from entering the female connecting socket 9 and causing the female connecting socket 9 to be damaged or fail.

The technical features of the embodiments described above can be combined in any way. To make the description concise, not all possible combinations of the technical features in the above-mentioned embodiments have been described. However, as long as there is no contradiction in the combination of these technical features, they should all be considered within the scope described in this specification.

The above-mentioned embodiments only express several implementation modes of the present application, and their description is relatively specific and detailed, but should not be understood as a limitation on the scope of the patent application. It should be pointed out that for those of ordinary skill in the art, several variations and improvements can be made without departing from the concept of the present application, and these all fall within the protection scope of the present application. Therefore, the protection scope of the patent of the present application should be subject to the appended claims.

## Claims

1. A battery assembly, **characterized by** comprising:
a battery, comprising a battery cell body and a female connecting socket, wherein the female connecting socket is located at a top edge of the battery cell body or adjacent to the battery cell body, a bottom of the female connecting socket is exposed from the battery cell body, and the female connecting socket serves as a charging interface and a discharging interface of the battery cell body; and
a battery compartment, wherein the battery compartment is generally in a tubular shape, the battery is insertable into the battery compartment; a male plug connector adapted to the female connecting socket is disposed in the battery compartment, and when the battery is installed in the battery compartment, the male plug connector is plugged into the female connecting socket.

2. The battery assembly according to claim 1, **characterized in that** a female socket protective cover sleeves the periphery of the female connecting socket, the female socket protective cover is generally a plate-like structure, a female socket fixing cavity penetrating the female socket protective cover is disposed in the female socket protective cover along a vertical direction, and the female connecting socket can be inserted into the female socket fixing cavity; a bottom surface of the female connecting socket is flush with a lower side of an inner surface of the female socket fixing cavity, or the bottom surface of the female connecting socket is slightly higher than the lower side of the inner surface of the female socket fixing cavity.

3. The battery assembly according to claim 2, **characterized in that** a plurality of connecting ears are disposed at an edge of the female socket protective cover along a circumferential direction of the female socket protective cover.

4. The battery assembly according to claim 3, **characterized in that** a top protective cover is disposed at a top of the battery cell body, the top protective cover is detachably connected to the battery cell body, tops of the female connecting socket and the female socket protective cover are covered by the top protective cover, and the female socket protective cover is detachably connected to the top protective cover via the connecting ears.

5. The battery assembly according to claim 3, **characterized in that** a female socket circuit board is further disposed between the top protective cover and the female connecting socket, and the female connecting socket is fixed below the female socket circuit board and electrically connected to the female socket circuit board.

6. The battery assembly according to claim 5, **characterized in that** a first groove recessed downward is disposed at a top of the top protective cover, and a handle is further disposed on the top protective cover, the handle spanning across two ends of the first groove.

7. The battery assembly according to claim 6, **characterized in that** a space between a sidewall enclosing the first groove and a sidewall enclosing the top protective cover forms an installation cavity, and the female socket circuit board is disposed in the installation cavity.

8. The battery assembly according to claim 2, **characterized in that** one side of the female socket protective cover is exposed from a side surface of the battery cell body.

9. The battery assembly according to any one of claims 2 to 8, **characterized in that** a slide groove is disposed, along a vertical direction, on a side of the battery cell body that is located at one side of the female socket protective cover, and the battery cell body can slide up and down relative to the male plug connector via the slide groove along the vertical direction.

10. The battery assembly according to any one of claims 2 to 8, **characterized in that** a bottom protective cover is further disposed at a bottom of the battery cell body, and the battery cell body is detachably connected to the bottom protective cover.

11. The battery assembly according to claim 1, **characterized in that** the battery comprises a top protective cover, the top protective cover is disposed at a top of the battery cell body and detachably connected to the battery cell body; and the top protective cover covers a top of the female connecting socket.

12. The battery assembly according to claim 11, **characterized in that** a plurality of first through holes are circumferentially disposed at a top of the top protective cover, a first connecting bolt passes through the first through hole, a plurality of first connecting holes are disposed at the top of the battery cell body, the plurality of first connecting holes correspond one-to-one to the plurality of first through holes, and the first connecting bolt can pass through the first connecting hole and be cooperatively connected with a nut, so as to relatively fix the top protective cover and the battery cell body.

13. The battery assembly according to claim 12, **characterized in that** the battery compartment comprises a base and a front baffle, a rear baffle, a left baffle, and a right baffle perpendicular to the base, an accommodating cavity for accommodating the battery is enclosed by the front baffle, the rear baffle, the left baffle, and the right baffle together, and a shape of the accommodating cavity is adapted to the battery.

14. The battery assembly according to claim 13, **characterized in that** the rear baffle, the left baffle, and the right baffle are integrally formed, the front baffle is detachably connected to the left baffle, and the front baffle is detachably connected to the right baffle; second through holes are disposed at two sides of the front baffle, a second connecting bolt passes through the second through hole, connecting plates are disposed at edges of the left baffle and the right baffle near the front baffle, respectively, the connecting plates are parallel to the front baffle, second connecting holes corresponding to the second through holes are disposed in the connecting plates, and the second connecting bolt passes through the second connecting hole and engages with a nut to fix the front baffle relative to the left baffle, and to fix the front baffle relative to the right baffle.

15. The battery assembly according to claim 13 or 14, **characterized in that** protruding positioning blocks are disposed at bottoms of the left baffle and the right baffle, respectively, positioning holes adapted to the positioning blocks are disposed in the base, and the positioning blocks can be inserted into the positioning holes.

16. The battery assembly according to claim 15, **characterized in that** fixing ears are disposed at bottoms of the left baffle and the right baffle, respectively, the fixing ears are perpendicular to the positioning blocks and extend in a direction away from the battery compartment; third through holes are disposed in the fixing ears, a third connecting bolt passes through the third through hole, third connecting holes adapted to the third through holes are disposed in the base, and the third connecting bolt passes through the third connecting hole and engages with a nut to fix the base relative to the fixing ear.

17. The battery assembly according to claim 13, **characterized in that** top-near portions of the rear baffle, the left baffle, and the right baffle are slightly inclined outward to form expanded portions, and the plurality of expanded portions enclose to form a conical structure with a wide top and a narrow bottom.

18. The battery assembly according to claim 11, **characterized in that** a first groove recessed downward is disposed at a top of the top protective cover, and a handle is further disposed on the top protective cover, the handle spanning across two ends of the first groove.

19. The battery assembly according to any one of claims 11 to 14, 17, and 18, **characterized in that** a female socket protective cover sleeves the periphery of the female connecting socket, one side of the female socket protective cover is exposed from a side surface of the battery cell body and is flush with a sidewall of the top protective cover at the side.

20. The battery assembly according to claim 1, **characterized in that** a connecting bracket is disposed at a top of the battery compartment, a bracket base is fixedly connected to the connecting bracket, and the male plug connector is disposed on the bracket base.

21. The battery assembly according to claim 20, **characterized in that** the connecting bracket is in an inverted L-shape, the connecting bracket comprises a vertical bracket sidewall and a horizontal bracket sidewall, and a bracket through hole for installing the bracket base is disposed in the horizontal bracket sidewall.

22. The battery assembly according to claim 21, **characterized in that** the bracket base is generally L-shaped, the bracket base comprises a vertical support sidewall and a horizontal support sidewall, the vertical support sidewall is parallel to the vertical bracket sidewall, the horizontal support sidewall is parallel to the horizontal bracket sidewall, and the male plug connector is detachably connected to the vertical support sidewall; the horizontal support sidewall is located above the horizontal bracket sidewall, a support connecting hole is disposed at a bottom of the horizontal support sidewall, the support connecting hole corresponds to the bracket through hole; a vertical support post is further disposed in the battery compartment, a connecting post is disposed at a top of the vertical support post, the connecting post can pass through the bracket through hole and be threadedly connected, in the support connecting hole, to the horizontal base sidewall so as to be relatively fixed.

23. The battery assembly according to claim 22, **characterized in that** the battery compartment comprises a base and a front baffle, a rear baffle, a left baffle, and a right baffle perpendicular to the base, an accommodating cavity for accommodating the battery is enclosed by the front baffle, the rear baffle, the left baffle, and the right baffle together, and a shape of the accommodating cavity is adapted to the battery.

24. The battery assembly according to claim 23, **characterized in that** the connecting bracket is disposed on the left baffle, the vertical bracket sidewall is integrally connected to the left baffle, and the horizontal bracket sidewall is perpendicular to the left baffle and extends in a direction toward the right baffle.

25. The battery assembly according to claim 23, **characterized in that** at least two vertical support posts are provided, and bottoms of the vertical support posts are detachably connected to the base.

26. The battery assembly according to claim 23 or 24, **characterized in that** top-near portions of the rear baffle, the left baffle, and the right baffle are slightly inclined outward to form expanded portions, and a clearance hole is disposed in the expanded portion of the left baffle.

27. The battery assembly according to claim 26, **characterized in that** a slide groove is disposed on one side of the battery cell body close to the female connecting socket along a vertical direction, and the battery cell body can slide relative to the male plug connector via the slide groove along the vertical direction.

28. The battery assembly according to claim 20, **characterized in that** a top protective cover is disposed at a top of the battery cell body, a bottom protective cover is disposed at a bottom of the battery cell body, the top protective cover is detachably connected to the battery cell body, and the bottom protective cover is detachably connected to the battery cell body.

29. A snow-clearing robot, **characterized in that** the snow-clearing robot comprises the battery assembly according to any one of claims 1 to 28.
